# FASCICULE DE BREVET EUROPEEN

(11) **EP 3 005 506 B1**
(45) Date de publication et mention de la délivrance du brevet: **11.09.2019**
(21) Numéro de dépôt: 14731701.0
(22) Date de dépôt: 21.05.2014
(51) Int. Cl.: H02G 3/18, H02G 9/10, H02G 3/14, E04F 19/08

(54) **BOITE DE SOL POUR APPAREILLAGES ELECTRIQUES AVEC UN COFFRAGE PERDU**
BODENBOX FÜR ELEKTROGERÄTE MIT EINEM ISOLIERTEN GEHÄUSE
BOX IN THE GROUND FOR ELECTRICAL APPLIANCES WITH AN ISOLATED CASING

(30) Priorité: 06.06.2013 FR 1355210
(43) Date de publication de la demande: 13.04.2016
(73) Titulaire: Legrand France, 87000 Limoges (FR); Legrand SNC, 87000 Limoges (FR)
(72) Inventeur: BUARD, Yvon, F-53600 Voutre (FR)
(74) Mandataire: Jacobacci Coralis Harle
(86) Numéro de dépôt international: PCT/FR2014/051197
(87) Numéro de publication internationale: WO 2014/195600

(56) Documents cités:
- EP-A1- 1 376 805
- EP-A2- 2 164 143
- EP-A2- 2 541 708
- WO-A1-01/63703
- DE-U1- 20 319 362
- GB-A- 2 475 259

## Description

### DOMAINE TECHNIQUE AUQUEL SE RAPPORTE L'INVENTION

La présente invention concerne une boîte de sol à encastrer dans une chape coulée sur un sol, ladite boîte comprenant une embase destinée à être fixée sur le sol et un capot rapporté sur l'embase, formant un coffrage perdu pour réaliser un logement vide dans la chape coulée.

L'invention trouve une application particulièrement avantageuse dans la réalisation d'une boîte de sol pour appareillages électriques tels que des prises de courant fort et de courant faible, des interrupteurs électriques.

### ARRIERE-PLAN TECHNOLOGIQUE

On connaît du document EP1376805 une boîte de sol dans laquelle un coffrage perdu est inséré via une ouverture frontale à l'intérieur d'un logement défini dans une partie inférieure fixée au sol. Ce coffrage comporte une paroi frontale rapportée sur une paroi latérale pourvue sur sa face interne d'un crochet de préhension.

Pour extraire le coffrage hors de la chape coulée, l'installateur doit alors retirer la paroi frontale à l'aide d'un outil puis il attrape le crochet de préhension pour tirer le coffrage hors de la chape.

Ce coffrage est complexe à réaliser et son extraction hors de la chape coulée est une opération fastidieuse.

Par ailleurs, on connaît du document EP2541708 une cassette de sol possédant en son centre une partie télescopique fermée par un couvercle pourvu d'une encoche logeant une poignée escamotable.

Pour verrouiller ou déverrouiller ladite partie télescopique, l'utilisateur utilise la poignée escamotable qui peut indéfiniment adopter une position sortie ou une position escamotée.

Cette poignée complexe est constituée de plusieurs pièces assemblées entre elles. Un tel assemblage est trop coûteux pour être utilisé dans le cadre d'un capot à usage unique.

Enfin, on connaît du document EP2164143 une boîte de sol fermée par un couvercle repositionnable. La paroi frontale de ce couvercle présente un renfoncement dans lequel est logée une poignée assemblée au couvercle de façon articulée afin de permettre son pivotement sur ce dernier.

Cette poignée peut, au choix et indéfiniment, être pivotée à la perpendiculaire du couvercle afin de constituer une zone de prise en main de ce dernier, ou être escamotée dans le renfoncement dudit couvercle lorsqu'elle n'est pas utilisée. Par ailleurs, on connaît du document WO0163703 un dispositif de recouvrement d'appareillage électrique , encastrable dans un sol, qui comprend une plaque , servant de cache , qui pressent en son centre un évidement accueillant un clapet assemblé à ladite plaque via une patter d'articulation. Le clapet est manoeuvrable au moyen d'une anse assemblée au clapet par une tige filetée permettant son articulation autour d'un axe. Cette anse est escamotable dans un évidement du clape et présente une encoche en regard d'une encoche dans la plaque qui facilite sa preise en main.

### OBJET DE L'INVENTION

Afin de remédier aux inconvénients de l'état de la technique, la présente invention propose une nouvelle boîte de sol telle que définie dans la revendication 1.

Grâce à l'invention, l'installateur peut facilement sans utiliser d'outil extraire le capot de la chape coulée et durcie autour de l'embase de la boîte de sol qui délimite le logement vide dans ladite chape.

D'autres caractéristiques non limitatives et avantageuses de la boîte de sol conforme à l'invention sont les suivantes :
- la paroi frontale du capot comporte une pluralité de fentes qui délimitent chacune une partie repliable ;
- la paroi frontale du capot comporte une seule fente qui délimite une pluralité de parties repliables ;
- la paroi frontale du capot comporte une pluralité de fentes qui délimitent deux à deux entre elles une partie repliable ;
- chaque partie repliable est rabattable contre une face arrière de la paroi frontale du capot pour former dans la paroi frontale une ouverture au travers de laquelle l'installateur peut prendre en main le capot ;
- chaque partie repliable est relevable en saillie de la face avant de la paroi frontale du capot pour former une anse par laquelle l'installateur peut prendre en main le capot ;
- la paroi frontale du capot comporte au moins un couple de fentes positionnées face à face délimitant des parties repliables en vis-à-vis ;
- chaque fente comporte une partie longitudinale avec deux extrémités recourbées ;
- la partie longitudinale de chaque fente longe un bord de la paroi frontale ;

- la partie longitudinale de chaque fente est située vers le centre de la paroi frontale et les extrémités recourbées sont orientées vers un bord de la paroi frontale ;
- chaque fente est située le long d'un coin de la paroi frontale.
- ladite fente présente la forme d'une croix centrée sur le centre de la paroi frontale qui délimite quatre parties repliables en forme de;
- chaque fente présente une largeur comprise entre 0,2 et 2mm;
- chaque fente présente une largeur égale à 1,5mm environ.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue éclatée d'un mode de réalisation préféré d'une boîte de sol selon l'invention ;
- la figure 2 est une vue de l'embase et du capot non assemblés de la boîte de sol de la figure 1 ;
- la figure 3 est une vue assemblée de la boîte de sol de la figure 1 ;
- la figure 4 est une vue en perspective d'un coin de l'embase de la boîte de sol de la figure 1 ;
- la figure 5 est une vue de dessous du coin de la figure 4 ;
- les figures 6 à 9 sont des vues en perspective de détail montrant l'assemblage d'un angle de la boîte de sol de la figure 1 ;
- la figure 10 est une vue de face de la tôle constituant le capot de la boîte de sol de la figure 1, découpée non pliée ;
- la figure 11 est une vue en perspective de dessus du capot de la boîte de la figure 1 ;
- les figures 12 et 13 sont des vues en perspective de dessus et de dessous du capot de la figure 11 dans la paroi frontale duquel deux ouvertures ont été créées pour sa prise en main ;
- les figures 14 à 21 sont des vues en perspective de dessus de différentes variantes du capot de la boîte de sol selon l'invention ;
- la figure 22 est une vue en perspective du capot de la figure 20 dans la paroi frontale duquel deux anses ont été créées pour sa prise en main ; et
- les figures 23 et 24 sont des vues en perspective de dessus du capot de la figure 21 dans la paroi frontale duquel deux anses ont été créées pour sa prise en main.

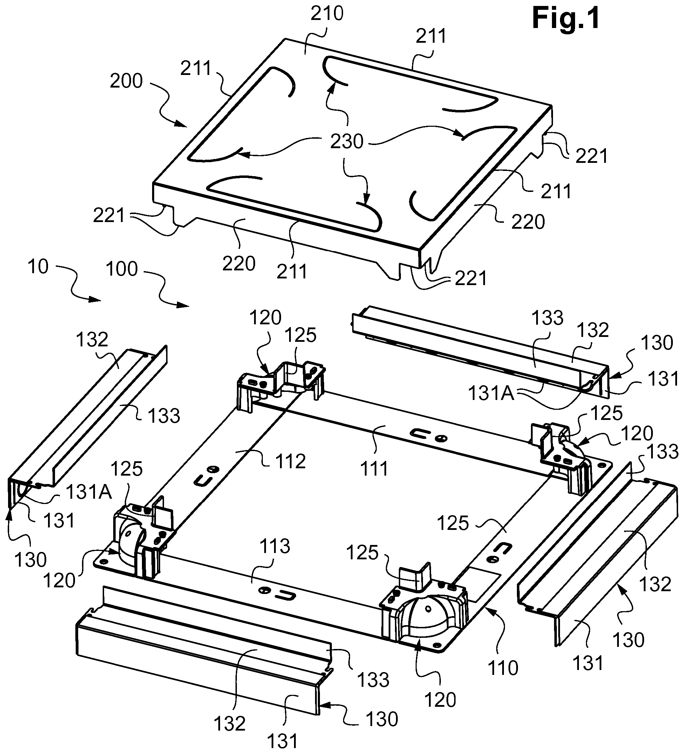

Sur les figures 1 à 3, on a représenté un mode de réalisation préférentiel d'une boîte de sol 10 à encastrer dans une chape coulée sur un sol.

Cette boîte comprend une embase 100 et un capot 200 rapporté sur l'embase 100.

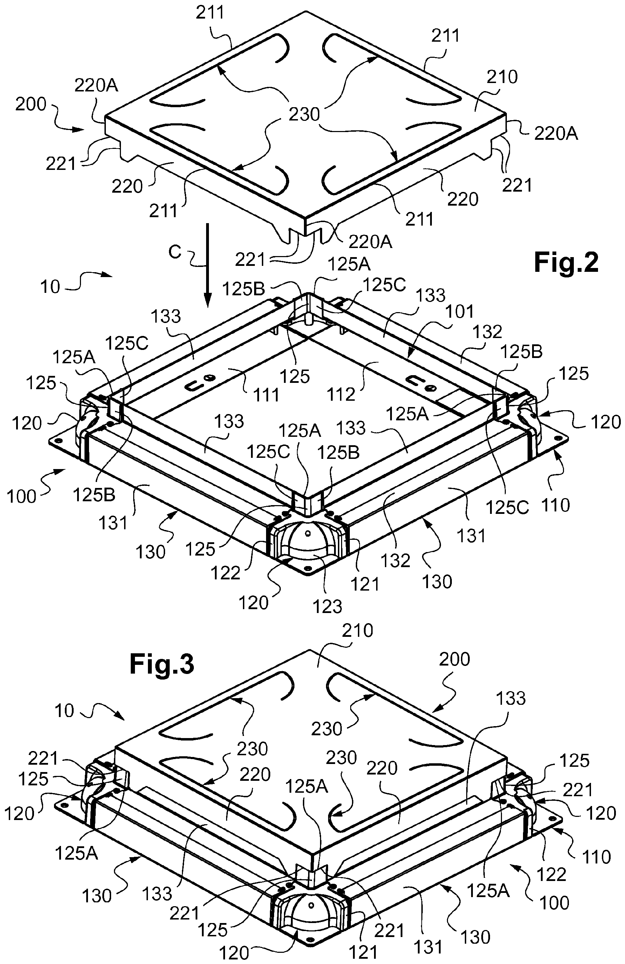

L'embase 100 est destinée à être fixée sur le sol, elle comprend un fond plat 110 et une paroi 120, 130 qui délimite un logement avec une ouverture frontale 101 opposée au fond plat 110 (voir figure 2).

Le capot 200 comporte une paroi frontale 210 bordée par au moins une paroi latérale 220. Il est rapporté sur l'embase 100 de sorte que sa paroi frontale 210 ferme l'ouverture frontale 101 du logement de l'embase 100 (voir figure 3).

Selon une caractéristique particulièrement avantageuse de la boîte de sol 10, une partie 221 du bord libre de la paroi latérale 220 du capot 200 est positionnée bord à bord avec une partie du bord libre 125A de la paroi 125 de l'embase 100 tandis qu'une partie de la paroi latérale 220 du capot 200, s'étendant perpendiculairement au fond plat 110 de l'embase 100, recouvre partiellement la face externe de la paroi 133 de l'embase 100 de manière que le capot 200 forme un coffrage perdu à extraire de la chape coulée autour de la boîte de sol (voir figure 3).

Comme le montrent les figures 1 à 3 et 6 à 9, selon le mode de réalisation représenté, l'embase 200 est réalisée en plusieurs pièces assemblées.

Le fond plat 110 de l'embase 100 est ici avantageusement un cadre plat formé par des bandes 111, 112, 113, 114 de tôle assemblées entre elles. Ce cadre présente ici un contour carré avec quatre branches rectilignes. Un tel cadre permet de réaliser des économies de matériaux utilisés.

Mais selon une variante de réalisation non représentée, on peut prévoir que le fond plat de l'embase est formé par une plaque pleine au contour carré ou rectangulaire.

On peut également prévoir selon une autre variante non représentée qu'à l'inverse d'une plaque pleine, le fond plat de l'embase soit formé uniquement par les surfaces de contact avec le sol de plots ou de pieds supports de ladite embase.

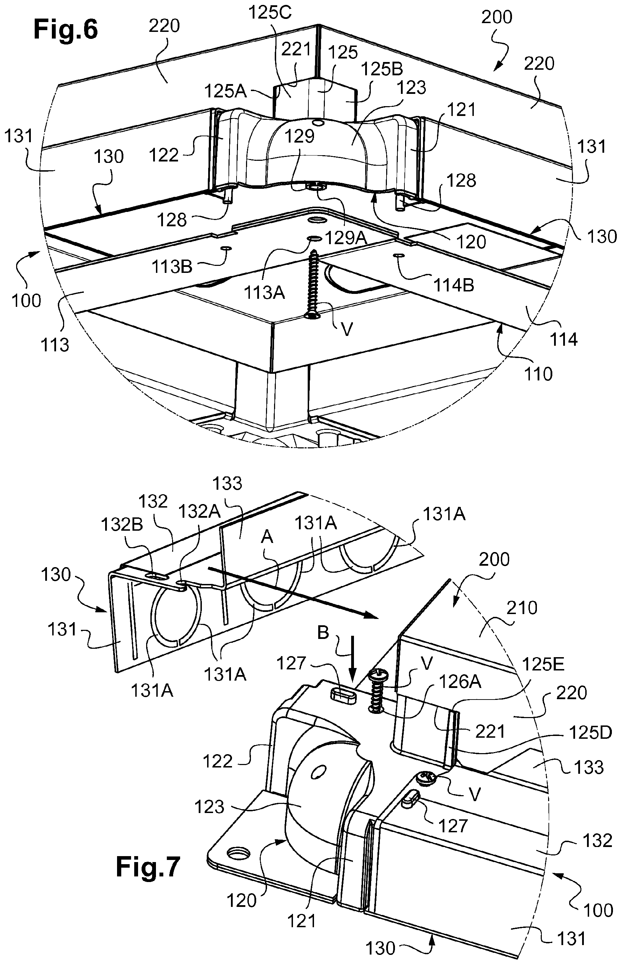

Comme le montrent plus particulièrement les figures 1 et 6, les bandes 111, 112, 113, 114 du cadre sont assemblées par l'intermédiaire de quatre coins 120.

Chaque coin 120 est une pièce monobloc réalisée par moulage d'une matière plastique ou synthétique fixée au fond plat 110 de l'embase 100 au moyen d'une vis.

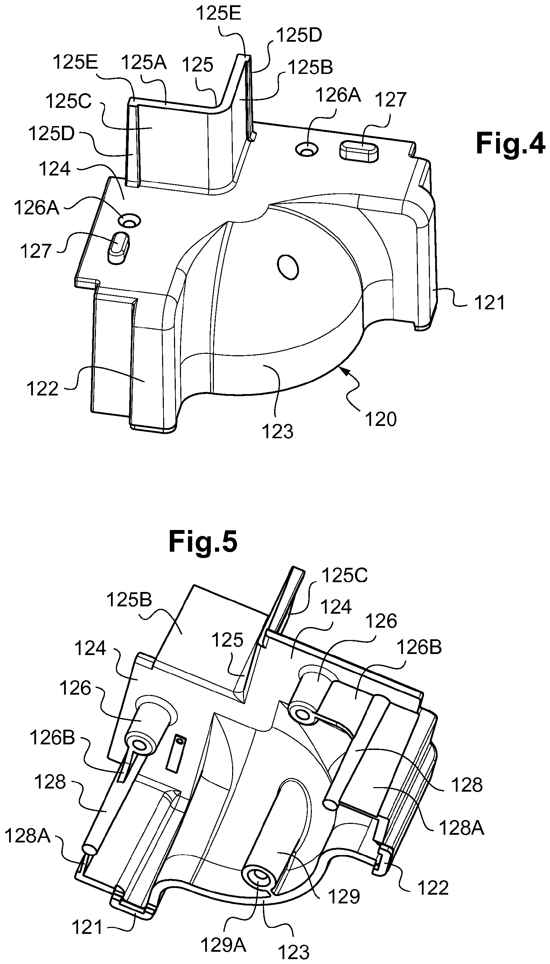

Comme le montrent plus particulièrement les figures 4 et 5, chaque coin 120 de l'embase 100 comprend deux montants verticaux 121, 122 orientés à angle droit l'un part rapport à l'autre et reliés l'un à l'autre par une partie centrale 123 formant un angle. Les deux montants verticaux 121, 122 et la partie centrale 123 sont surmontés d'une plate-forme horizontale 124 à angle droit qui porte une cornière 125 avec deux ailes 125B, 125C en angle droit s'élevant perpendiculairement à ladite plate-forme 124 et comprenant un bord libre 125A.

Lorsque les coins 120 sont fixés aux bandes 111, 112, 113, 114 du fond plat 110, les cornières 125 s'ouvrent vers l'intérieur du cadre (voir figure 1).

En outre, comme le montre la figure 5, la face arrière de la plate-forme 124 de chaque coin 120 porte, de part et d'autre de la cornière 125, deux parois cylindriques 126 taraudées intérieurement et délimitant deux puits qui débouchent par des embouchures 126A sur la face avant de ladite plate-forme 124 pour la réception de vis V (voir figure 7). Les parois cylindriques 126 taraudées des puits sont chacune extérieurement reliées par une aile de rigidification 126B à un pilier 128 qui s'étend perpendiculairement à la face arrière de la plate-forme 124. Chaque pilier 128 est lié par une aile de rigidification 128A à la face arrière d'un montant vertical 121, 122 du coin 120 (voir figure 5). La face arrière de la partie centrale 123 de chaque coin 120 porte une paroi cylindrique 129 taraudée intérieurement et délimitant un puits qui débouche par une embouchure 129A située à la base du coin 120, à l'opposé de ladite plate-forme 124. Ce puits reçoit une vis V pour la solidarisation dudit coin 120 au fond plat 110 de l'embase 100 (voir figure 6).

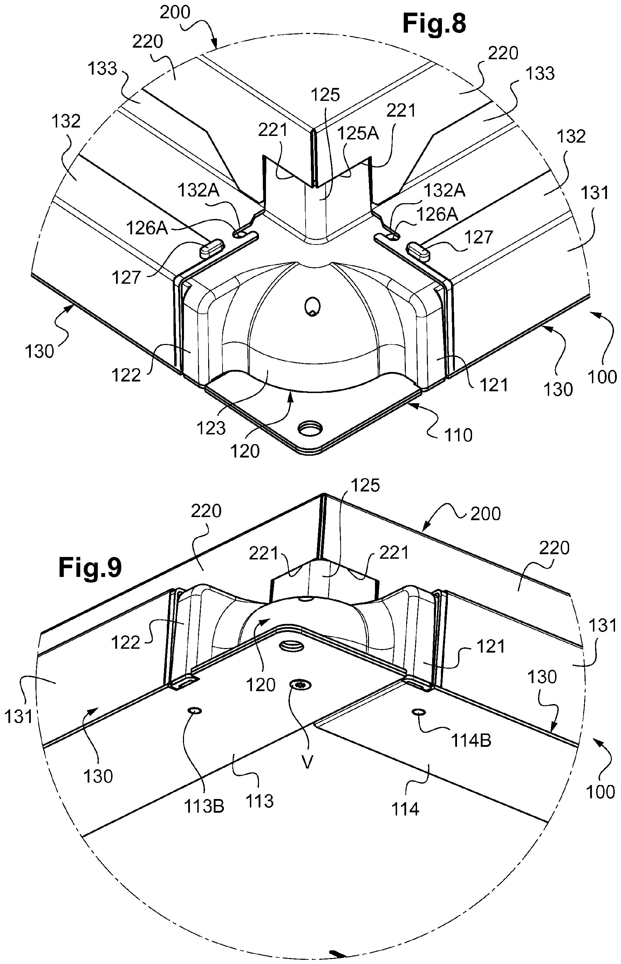

Comme le montrent plus particulièrement les figures 6 et 9, chaque coin 120 est solidarisé aux bandes 111, 112, 113, 114 du fond plat 110 de l'embase 100 par l'intermédiaire de la vis V qui traverse deux orifices 113A superposés prévus dans deux extrémités superposées des bandes 113,114 et qui est vissée dans le puits 129 tandis que les extrémités libres des piliers 128 du coin 120 sont engagées dans d'autres orifices 113B, 114B prévus dans lesdites bandes 113, 114, pour solidariser les deux bandes 113, 114 l'une à l'autre en étant orientées à 90 degrés l'une par rapport à l'autre.

Comme le montre la figure.4, la plate-forme 124 de chaque coin 120 de l'embase 100 porte en saillie, à proximité de chaque embouchure 126A, un tenon 127 ici de forme oblongue.

Par ailleurs, selon l'exemple représenté sur les figures 1 à 3, l'embase 100 comporte quatre parois latérales 130 raccordées entre elles par les coins 120 pour délimiter le logement parallélépipédique avec l'ouverture frontale 101.

Chaque paroi latérale 130 de l'embase 100 est réalisée en tôle découpée et pliée.

Elle se présente sous la forme d'une cornière en angle droit avec deux ailes longitudinales 131, 132.

L'une des ailes longitudinales 131 forme un panneau vertical positionné perpendiculairement au fond plat 110 de l'embase 100. Le panneau vertical 131 de chaque paroi latérale 130 de l'embase 100 présente deux extrémités qui recouvrent partiellement la face externe de montants verticaux 121, 122 de deux coins 120 adjacents de l'embase 100.

L'autre aile longitudinale 132 forme un panneau horizontal positionné parallèlement audit fond plat 110 de l'embase 100. Le panneau horizontal 132 présente deux extrémités en appui sur les plates-formes 124 desdits deux coins 120 adjacents de l'embase 100 (voir figures 7 et 8).

En outre, le panneau horizontal 132 de chaque paroi latérale 130 comporte un retour vertical 133 qui s'étend dans le prolongement de deux ailes 125B, 125C des cornières 125 desdits deux coins 120 adjacents, situées le long d'un même côté de l'embase 100, pour fermer l'espace entre lesdites cornières 125 et former une continuité de paroi périphérique qui délimite l'ouverture frontale 101 du logement de l'embase 100 (voir figure 2).

Chaque panneau horizontal 132 de chaque paroi latérale 130 de l'embase 100 comprend à proximité de chaque bord latéral d'extrémité, un logement 132B au contour oblong (ici une ouverture oblongue) et une encoche 132A au fond arrondi pour la fixation de ladite paroi latérale 130 à deux coins 120 adjacents de l'embase 100 (voir figure 7).

Comme le montre plus particulièrement la figure 7, chaque paroi latérale 130 est rapportée suivant la flèche A sur deux coins adjacents 120 de l'embase 100 de telle manière que chaque encoche 132A s'engage sur le fût d'une vis V vissée partiellement dans le puits taraudé 126 d'un coin 120. Puis la vis V est complètement vissée dans son puits de manière à plaquer suivant la flèche B la paroi latérale 130 contre les coins 120 en engageant chaque logement 132B du panneau horizontal 132 de la paroi latérale 130 sur chaque tenon 127 porté par chaque plate-forme 124 de chaque coin 120. La coopération des logements 132B de chaque paroi latérale 130 avec les tenons 127 des coins 120 assure un bon positionnement de la paroi latérale 130 sur lesdits coins 120 en recouvrant partiellement la face externe des plates-formes 124 et des montants verticaux 121, 122 desdits coins 120.

Les plates-formes 124 des coins 120 de l'embase 100 forment alors un appui pour les parois latérales 130 de l'embase 100.

Avantageusement, le panneau vertical 131 d'au moins une paroi latérale 130 de l'embase 100 est pourvu de découpes 131A qui délimitent au moins une portion retirable pour former une ouverture d'accueil d'une extrémité d'un conduit de cheminement positionné sur le sol (voir figures 1 et 7).

Dans ce cas, on peut prévoir que la face interne dudit panneau vertical 131 comprenant lesdites découpes est recouverte d'un film de protection adhésif retirable qui obture lesdites découpes 131A afin d'éviter lors du coulage de la chape qu'une faible partie du béton entre dans le logement intérieur de la boîte de sol 10.

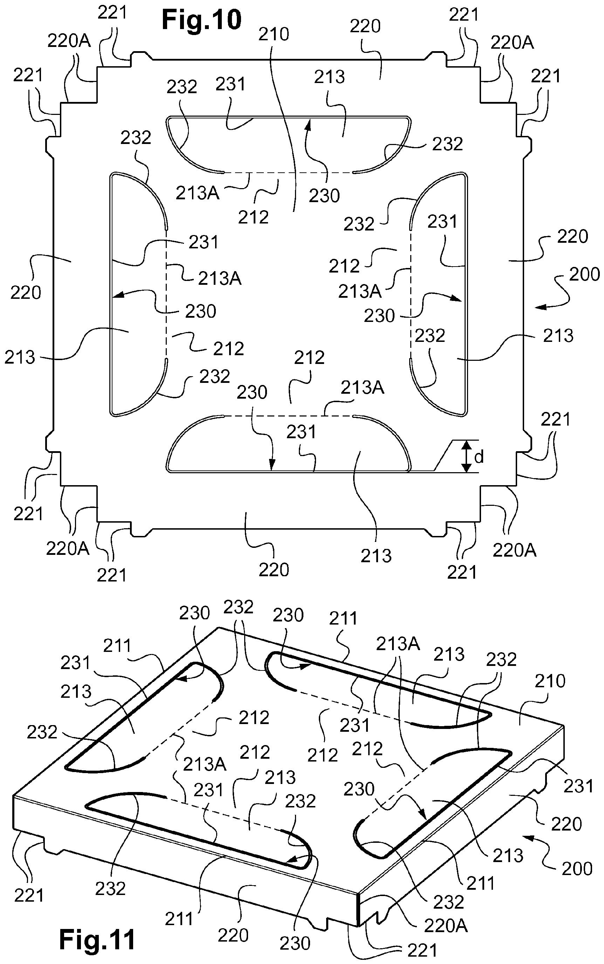

Sur les figures 10 et 11, on a représenté isolément le capot 200 de la boîte de sol 10 de la figure 1.

Ce capot 200 est réalisé en tôle ou en feuille métallique découpée et pliée (voir figure 10).

La feuille métallique présente ici un contour globalement carré, avec aux quatre coins, une première découpe 220A en angle droit encadrée par deux autres découpes 221 en angle droit (voir figure 10).

Après pliage des quatre côtés 220 de la feuille métallique, suivant quatre lignes de pliage 211 de façon à rapprocher l'un contre l'autre les bords des quatre encoches 220A, le capot 200 comporte une paroi frontale 210 au contour rectangulaire 211, ici carré, bordé par quatre parois latérales 220 perpendiculaires jointives aux quatre coins 220A du capot 200. Chaque paroi latérale 220 du capot 200 comporte au niveau d'un coin 220A une découpe 221 en angle droit.

Comme le montrent plus particulièrement les figures 2 et 3, le capot 200 est rapporté sur l'embase 100 suivant la flèche C de sorte que :
- sa paroi frontale 210 ferme l'ouverture frontale 101 du logement de l'embase 100 donc le logement intérieur de la boîte de sol 10,
- les parois latérales 220 du capot 200 qui s'étendent perpendiculairement au fond plat 110 de l'embase 100, recouvrent partiellement les faces externes des retours 133 des parois latérales 130 de l'embase 100, et
- les bords des découpes 221 prévues dans les parois latérales 220 au niveau des coins 220A du capot 200 sont positionnés bord à bord avec le bord libre 125A des cornières 125 des coins 120 de l'embase 100. En d'autres termes, les coins 220A du capot 200 sont positionnés bord à bord avec les coins 125 de l'embase 100.

Avantageusement, comme le montrent plus particulièrement les figures 4 et 7, les ailes 125B, 125C des cornières 125 des coins 120 de l'embase 100, comprennent chacune une nervure 125D qui s'étend depuis le bord libre 125A le long du bord libre vertical de l'aile de la cornière. Ces nervures 125D forment une surépaisseur 125E aux extrémités du bord libre 125A pour améliorer l'appui du bord libre 221 du capot 200 sur le bord libre 125A de la cornière de l'embase 100.

De cette manière, le capot 200 protège le logement intérieur de la boîte de sol 10 lorsque la chape est coulée sur le sol, en le fermant frontalement et il constitue un coffrage perdu qui peut être facilement extrait de la chape après son durcissement.

Comme le montrent les figures 10 à 24, selon une caractéristique particulièrement avantageuse de la boîte de sol 10 selon l'invention, la paroi frontale 210 du capot 200 comporte au moins une fente 230 ; 240 ; 250 ; 260 ; 270 ; 280 ; 290 ; 330 ; 340 qui délimite au moins une partie repliable 213, c'est-à-dire déformable par repliement le long d'au moins une ligne de pliage 213A ; 213B, pour former, d'un seul tenant avec la paroi frontale 210 du capot 200, au moins une zone 212 de prise en main du capot 200 par un installateur afin de l'extraire de sa coopération avec l'embase 100.

Ainsi, grâce à cette caractéristique, l'installateur peut facilement sans outil prendre en main le capot 200 pour l'extraire de la chape coulée et durcie sur le sol.

Selon une caractéristique avantageuse, chaque fente 230 ; 240 ; 250 ; 260 ; 270 ; 280 ; 290 ; 330 ; 340 présente une largeur d (voir figure 10) comprise entre 0,2 et 2 mm.

Lorsque la fente est réalisée par découpe, c'est-à-dire avec un enlèvement de matière, elle présente une largeur d comprise entre 1 et 2 mm, préférentiellement égale à 1,5 mm de manière à éviter qu'une quantité importante de béton passe au travers d'une fente du capot 200 lors du coulage de la chape sur le sol.

Lorsque la fente est réalisée par cisaillage, elle présente une largeur comprise entre 0,2 et 1 mm, préférentiellement égale au jeu de cisaillage d'environ 0,2 mm (à l'oeil nu les bords de la fente apparaissant bord à bord).

Selon les modes de réalisation du capot 200 représentés sur les figures 10 à 16 et 18, la paroi frontale 210 du capot 200 comporte une pluralité de fentes 230 ; 240 ; 250 ; 260 ; 280 qui délimitent chacune une partie repliable 213. Ici, la paroi frontale 210 du capot 200 comporte deux couples de fentes 230 ; 240 ; 250 ; 260 ; 280 positionnées face à face délimitant des parties repliables 213 en vis-à-vis.

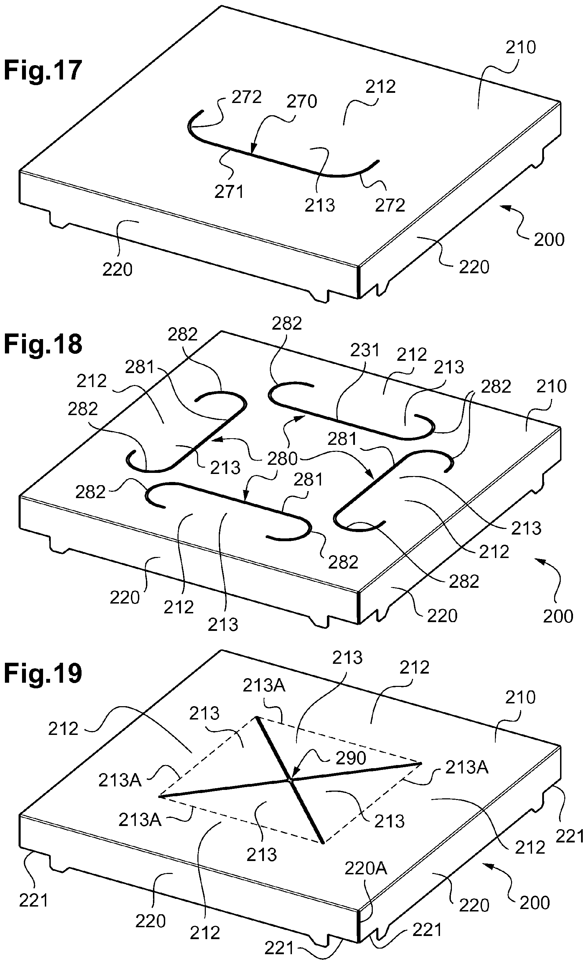

Selon le mode de réalisation du capot 200 représenté sur la figure 17, la paroi frontale 210 du capot 200 comporte en son centre une seule fente 270 qui délimite une seule partie repliable 213.

Selon le mode de réalisation du capot 200 représenté sur la figure 19, la paroi frontale 210 du capot comporte une seule fente 290 qui délimite une pluralité de parties repliables 213. Ici, ladite fente 290 présente la forme d'une croix centrée sur le centre de la paroi frontale 210 qui délimite quatre parties repliables 213 en forme de triangle dont les sommets sont disjoints et orientés vers le centre de la paroi frontale 210.

Selon les modes de réalisation représentés sur les figures 10 à 18, chaque fente comporte une partie longitudinale 231 ; 241 ; 251 ; 261 ; 271 ; 281 avec deux extrémités recourbées 232 ; 242 ; 252 ; 262 ; 272 ; 282. Selon les modes de réalisation représentés sur les figures 11, 14, 15 et 18, les extrémités recourbées 232 ; 242 ; 252 ; 282 sont orientées l'une vers l'autre. Entre les parties recourbées 232 ; 242 ; 252 ; 262 ; 272 ; 282 sont définies des lignes de pliage 213A qui s'étendent d'une extrémité recourbée à l'autre, et qui forment des arêtes 213A une fois les parties repliables 213 effectivement repliées le long de ces lignes de pliage 213A.

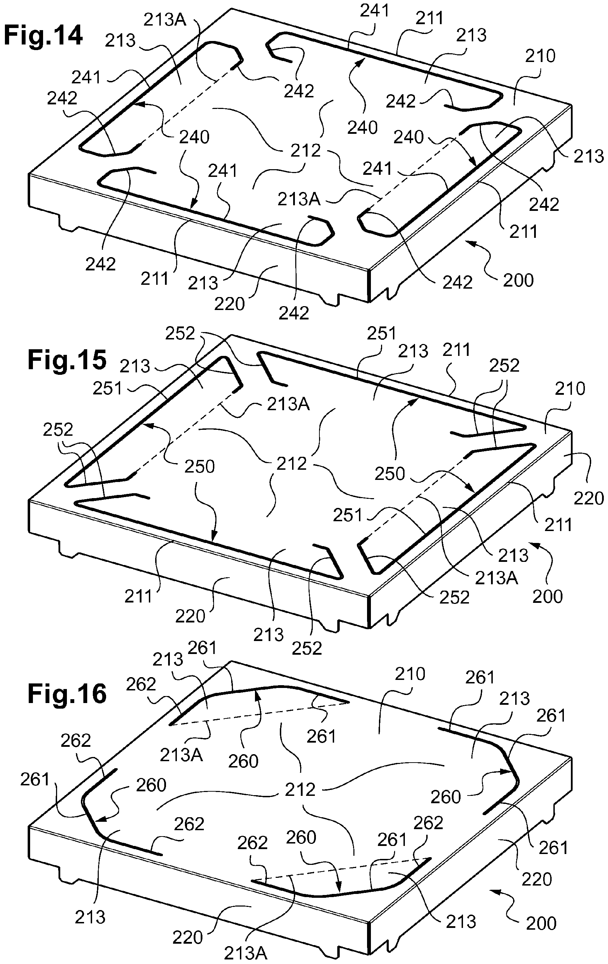

Selon les modes de réalisation représentés sur les figures 10 à 15, la partie longitudinale 231 ; 241 ; 251 de chaque fente 230 ; 240 ; 250 longe un bord 211 de la paroi frontale 210 du capot 200, tandis que selon le mode de réalisation représenté sur la figure 18, la partie longitudinale 281 de chaque fente 280 est située vers le centre de la paroi frontale 210 et les extrémités recourbées 282 sont orientées vers un bord 211 de la paroi frontale 210 du capot 200. Selon le mode de réalisation représenté sur la figure 16, chaque fente 260 est située le long d'un coin de la paroi frontale 210 du capot 200.

Lorsque la partie longitudinale de chaque fente longe un bord de la paroi frontale du capot, la pression exercée par le béton sur les parties fendues du capot est avantageusement diminuée.

Lorsque la partie longitudinale de chaque fente est située vers le centre de la paroi frontale du capot, la zone de prise en main se situe plus proche des bords du capot et la force de traction exercée par l'installateur sur le capot facilite la séparation entre le béton coulé et le capot.

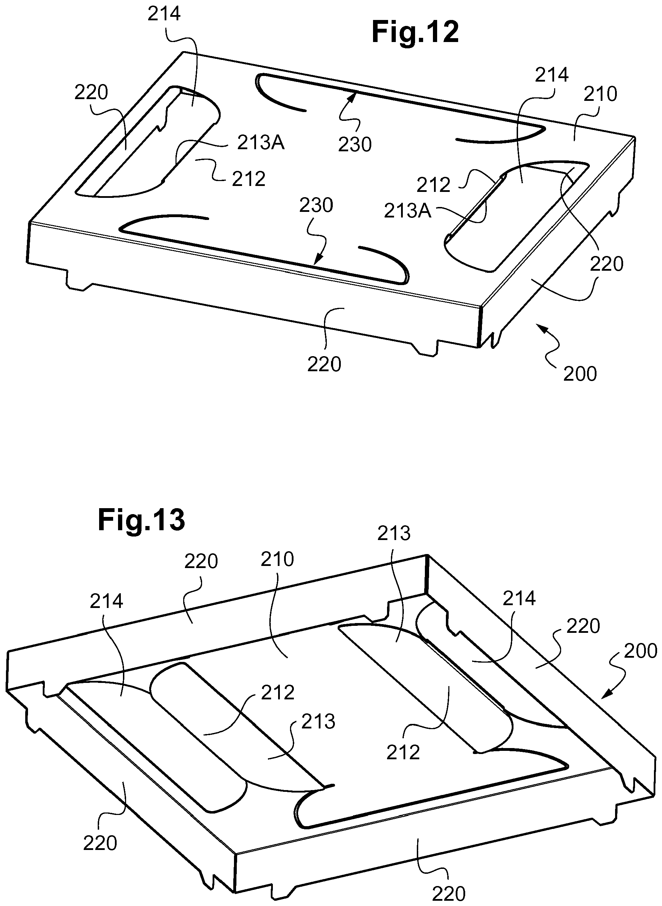

Selon les modes de réalisation représentés sur les figures 10 à 19, chaque partie repliable 213 est rabattable contre une face arrière de la paroi frontale 210 du capot 200 pour former dans la paroi frontale 210 une ouverture 214 au travers de laquelle l'installateur peut prendre en main le capot 200 au niveau de sa zone de prise en main 212 (voir figures 12 et 13).

Avantageusement, dans le capot 200 représenté sur les figures 10 à 16, 18 et 19, en rabattant deux parties repliables 213, l'installateur peut créer deux zones 212 de prise en main en vis-à-vis (voir figures 12 et 13) pour prendre le capot 200 avec ses deux mains et facilement l'extraire de la chape.

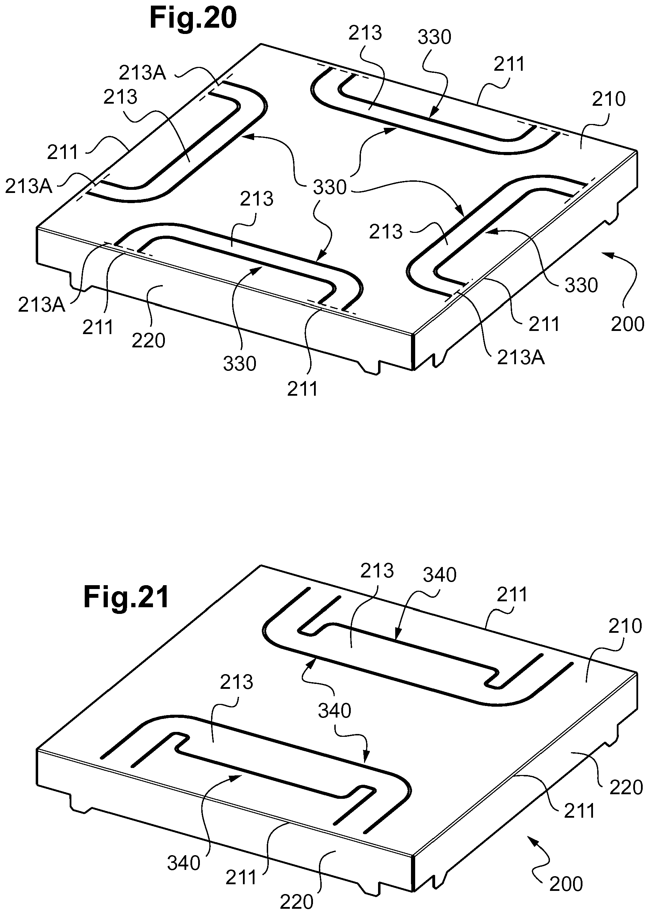

Selon les modes de réalisation du capot 200 représentés sur les figures 20 à 24, la paroi frontale 210 du capot 200 comporte une pluralité de fentes 330 ; 340 qui délimitent deux à deux entre elles une seule partie repliable 213.

Chaque partie repliable 213 est relevable en saillie de la face avant de la paroi frontale 210 du capot 200 pour former une anse 213 attachée à la paroi frontale 210 du capot 200, avec une zone 212 de prise en main par laquelle l'installateur peut prendre en main le capot 200 pour l'extraire de sa coopération avec l'embase et de la chape coulée et durcie sur le sol.

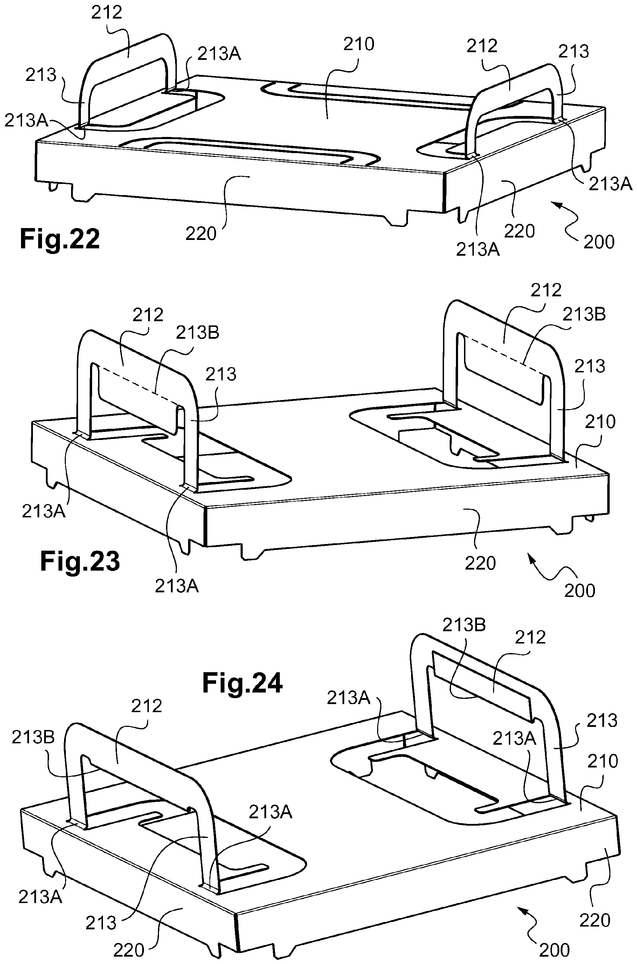

Avantageusement, comme le montrent plus particulièrement les figures 23 et 24, les fentes 340 du capot 200 présentent une trajectoire telle que chaque anse 213 formée comporte une partie repliable sur elle-même le long d'une ligne de pliage 213B pour réaliser une zone 212 de prise en main sans bord coupant. De cette manière, l'installateur peut prendre en main le capot 200 par deux anses 213 sans risquer de se blesser.

## Revendications

1. Boîte de sol (10) à encastrer dans une chape coulée sur un sol, ladite boîte comprenant une embase (100) destinée à être fixée sur le sol et un capot (200) rapporté sur l'embase, formant un coffrage perdu pour réaliser un logement vide dans la chape coulée, ledit capot (200), réalisé d'une seule pièce en tôle découpée et pliée, comporte une paroi frontale (210) **caractérisée en ce que** ledit capot comporte au moins une paroi latérale (220) perpendiculaire à ladite partie frontale, ladite paroi latérale (220) présentant une partie (221) de son bord libre positionnée bord à bord avec une partie du bord libre (125A) de la paroi (125) de l'embase (100), ladite paroi frontale (210) fermant l'ouverture frontale (101) du logement de l'embase (100) qui constitue le logement intérieur de la boîte de sol (10), et étant pourvue d'au moins une fente (230 ; 240 ; 250 ; 260 ; 270 ; 280 ; 290 ; 330 ; 340) qui délimite au moins une partie repliable (213), c'est-à-dire déformable par repliement le long d'au moins une ligne de pliage (213A ; 213B), pour former, d'un seul tenant avec la paroi frontale (210) du capot (200), au moins une zone (212) de prise en main du capot (200) par un installateur afin de l'extraire de sa coopération avec l'embase.

2. Boîte de sol (10) selon la revendication 1, dans laquelle la paroi frontale (210) du capot (200) comporte une pluralité de fentes (230 ; 240 ; 250 ; 260 ; 280) qui délimitent chacune une partie repliable (213).

3. Boîte de sol (10) selon la revendication 1, dans laquelle la paroi frontale (210) du capot (200) comporte une seule fente (290) qui délimite une pluralité de parties repliables (213).

4. Boîte de sol (10) selon la revendication 1, dans laquelle la paroi frontale (210) du capot (200) comporte une pluralité de fentes (330 ;340) qui délimitent deux à deux entre elles une partie repliable (213).

5. Boîte de sol (10) selon l'une des revendications précédentes, dans laquelle chaque partie repliable (213) est rabattable contre une face arrière de la paroi frontale (210) du capot (200) pour former dans la paroi frontale (210) une ouverture (214) au travers de laquelle l'installateur peut prendre en main le capot (200).

6. Boîte de sol (10) selon l'une des revendications 1 à 4, dans laquelle chaque partie repliable (213) est relevable en saillie de la face avant de la paroi frontale du capot pour former une anse (213) par laquelle l'installateur peut prendre en main le capot (200).

7. Boîte de sol (10) selon l'une des revendications 1 et 2, dans laquelle la paroi frontale (210) du capot comporte au moins un couple de fentes (230 ; 240 ; 250 ; 260 ; 280) positionnées face à face délimitant des parties repliables (213) en vis-à-vis.

8. Boîte de sol (10) selon l'une des revendications précédentes, dans laquelle chaque fente (230 ; 240 ; 250 ; 260 ; 270 ; 280) comporte une partie longitudinale (231 ; 241 ; 251 ; 261 ; 271 ; 281) avec deux extrémités recourbées (232 ; 242 ; 252 ; 262 ; 272 ; 282).

9. Boîte de sol (10) selon la revendication précédente, dans laquelle la partie longitudinale (231 ; 241 ; 251 ; 271) de chaque fente (230 ; 240 ; 250 ; 270) longe un bord (211) de la paroi frontale (210).

10. Boîte de sol (10) selon la revendication 8, dans laquelle la partie longitudinale (281) de chaque fente (280) est située vers le centre de la paroi frontale (210) et les extrémités recourbées (282) sont orientées vers un bord (211) de la paroi frontale (210).

11. Boîte de sol (10) selon la revendication 8, dans laquelle chaque fente (260) est située le long d'un coin de la paroi frontale (210).

12. Boîte de sol (10) selon la revendication 3, dans laquelle ladite fente (290) présente la forme d'une croix centrée sur le centre de la paroi frontale qui délimite quatre parties repliables (213) en forme de triangle.

13. Boîte de sol (10) selon l'une des revendications précédentes, dans laquelle chaque fente (230 ; 240 ; 250 ; 260 ; 270 ; 280 ; 290 ; 330 ; 340) présente une largeur (d) comprise entre 0,2 et 2 mm ;

14. Boîte de sol (10) selon la revendication précédente, dans laquelle chaque fente (230 ; 240 ; 250 ; 260 ; 270 ; 280 ; 290 ; 330 ; 340) présente une largeur (d) égale à 1,5 mm environ.

## Patentansprüche

1. In ein auf einem Boden gegossenen Estrich einzulassende Bodenbox (10), die einen Sockel (100), der dazu bestimmt ist, auf dem Boden befestigt zu werden, und einen am Sockel angebrachten Deckel (200) aufweist und eine verlorene Schalung bildet, um im gegossenen Estrich einen leeren Raum zu bilden, wobei der aus einem ausgeschnittenen und gefalteten Blech einstückig gefertigte Deckel (200) eine Vorderwand (210) aufweist,
**dadurch gekennzeichnet, daß** der Deckel wenigstens eine zur Vorderwand senkrechte Seitenwand (220) aufweist, wobei ein Teil (221) des freien Rands der Seitenwand (220) an einen Teil des freien Rands (125A) der Wand (125) des Sockels (100) stoßend angeordnet ist, wobei die vordere Wand (201) die vordere Öffnung (101) des Raums des Sockels (100), der den Innenraum der Bodenbox (10) bildet, verschließt, und mit wenigstens einem Schlitz (230; 240; 250; 260; 270; 280; 290; 330; 340) versehen ist, der wenigstens einen umfaltbaren, d. h. durch Umfalten entlang wenigstens einer Faltlinie (213A; 213B) verformbaren Teil (213) begrenzt, um einstückig mit der Vorderwand (210) des Deckels (200) wenigstens eine Zone (212) zum Ergreifen des Deckels (200) durch einen Installateur zu bilden, um diesen aus dem Formschluß mit dem Sockel zu entnehmen.

2. Bodenbox (10) gemäß Anspruch 1, bei der die Vorderwand (210) des Deckels (200) eine Anzahl Schlitze (230; 240; 250; 260; 280) aufweist, von denen jeder einen umfaltbaren Teil (213) begrenzt.

3. Bodenbox (10) gemäß Anspruch 1, bei der die Vorderwand (210) des Deckels (200) einen einzigen Schlitz (290) aufweist, der eine Anzahl umfaltbarer Teile (213) begrenzt.

4. Bodenbox (10) gemäß Anspruch 1, bei der die Vorderwand (210) des Deckels (200) eine Anzahl Schlitze (330; 340) aufweist, die jeweils zu zweit zwischen sich einen umfaltbaren Teil (213) begrenzen.

5. Bodenbox (10) gemäß einem der vorangehenden Ansprüche, bei der jeder umfaltbare Teil (213) gegen eine Rückseite der Vorderwand (210) des Deckels (200) umgefaltet werden kann, um in der Vorderwand (210) eine Öffnung (214) zu bilden, durch die der Installateur den Deckel (200) in die Hand nehmen kann.

6. Bodenbox (10) gemäß einem der Ansprüche 1 bis 4, bei der jeder umfaltbare Teil (213) auf der Vorderseite der Vorderwand hervorstehend angehoben werden kann, um einen Henkel (213) zu bilden, mit dem der Installateur den Deckel (200) in die Hand nehmen kann.

7. Bodenbox (10) gemäß einem der Ansprüche 1 und 2, bei der die Vorderwand (210) des Deckels wenigstens ein Paar einander gegenüberliegender Schlitze (230; 240; 250; 260; 280) aufweist, die gegenüberliegende umfaltbare Teile (213) begrenzen.

8. Bodenbox (10) gemäß einem der vorangehenden Ansprüche, bei der jeder Schlitz (230; 240; 250; 260; 270; 280) einen längs gerichteten Teil (231; 241; 251; 261; 271; 281) mit zwei gekrümmten Enden (232; 242; 252; 262; 272; 282) aufweist.

9. Bodenbox (10) gemäß dem vorangehenden Anspruch, bei der der längs gerichtete Teil (231; 241; 251; 271) jedes Schlitzes (230; 240; 250; 270) an einem Rand (211) der Vorderwand (210) entlang führt.

10. Bodenbox (10) gemäß Anspruch 8, bei der der längs gerichtete Teil (281) jedes Schlitzes (280) zur Mitte der Vorderwand (210) hin gelegen ist und die gekrümmten Enden (282) zu einem Rand (211) der Vorderwand (210) hin gerichtet sind.

11. Bodenbox (10) gemäß Anspruch 8, bei der jeder Schlitz (260) entlang einer Ecke der Vorderwand (210) gelegen ist.

12. Bodenbox (10) gemäß Anspruch 3, bei der der Schlitz (290) die Form eines auf die Mitte der Vorderwand zentrierten Kreuzes aufweist, das vier dreieckförmige umfaltbare Teile (213) begrenzt.

13. Bodenbox (10) gemäß einem der vorangehenden Ansprüche, bei der jeder Schlitz (230; 240; 250; 260; 270; 280; 290; 330; 340) eine Breite (d) zwischen 0,2 und 2 mm aufweist.

14. Bodenbox (10) gemäß dem vorangehenden Anspruch, bei der jeder Schlitz (230; 240; 250; 260; 270; 280; 290; 330; 340) eine Breite (d) von ungefähr 1,5 mm aufweist.

## Claims

1. A floor box (10) for flush mounting in a screed cast on a floor, said box comprising a base (100) for fastening on the floor and a cover (200) that is fitted on the base, which base constitutes lost formwork for forming an empty housing in the cast screed, said cover (200), which is made as a single piece of sheet metal that has been cut and folded, includes a front wall (210), the floor box being **characterized in that** said cover includes at least one side wall (220) that is perpendicular to said front portion, said side wall (220) presenting a portion (221) of its free edge positioned edge to edge with a portion of the free edge (125A) of the wall (125) of the base (100), said front wall (210) closing the front opening (101) of the housing of the base (100) that constitutes the inner housing of the floor box (10), and being provided with at least one slot (230; 240; 250; 260; 270; 280; 290; 330; 340) that defines at least one foldable portion (213), i.e. a portion that is deformable by folding along at least one fold line (213A; 213B), so as to form, integrally with the front wall (210) of the cover (200), at least one zone (212) that enables an installer to take hold of the cover (200) in order to separate it from the base.

2. A floor box (10) according to claim 1, wherein the front wall (210) of the cover (200) includes a plurality of slots (230; 240; 250; 260; 280), each of which defines a foldable portion (213).

3. A floor box (10) according to claim 1, wherein the front wall (210) of the cover (200) includes a single slot (290) that defines a plurality of foldable portions (213) .

4. A floor box (10) according to claim 1, wherein the front wall (210) of the cover (200) includes a plurality of slots (330; 340) that, in pairs, define between them respective foldable portions (213).

5. A floor box (10) according to any preceding claim, wherein each foldable portion (213) can be folded back against a rear face of the front wall (210) of the cover (200) so as to form, in the front wall (210), an opening (214) through which the installer can take hold of the cover (200).

6. A floor box (10) according to any one of claims 1 to 4, wherein each foldable portion (213) can be lifted up so as to project from the front face of the front wall of the cover so as to form a handle (213) via which the installer can take hold of the cover (200).

7. A floor box (10) according to claim 1 or claim 2, wherein the front wall (210) of the cover includes at least one pair of slots (230; 240; 250; 260; 280), positioned face to face and defining facing foldable portions (213).

8. A floor box (10) according to any preceding claim, wherein each slot (230; 240; 250; 260; 270; 280) comprises a longitudinal portion (231; 241; 251; 261; 271; 281) with two curved ends (232; 242; 252; 262; 272; 282) .

9. A floor box (10) according to the preceding claim, wherein the longitudinal portion (231; 241; 251; 271) of each slot (230; 240; 250; 270) borders an edge (211) of the front wall (210).

10. A floor box (10) according to claim 8, wherein the longitudinal portion (281) of each slot (280) is situated towards the center of the front wall (210) and the curved ends (282) are oriented towards an edge (211) of the front wall (210).

11. A floor box (10) according to claim 8, wherein each slot (260) is situated along a corner of the front wall (210) .

12. A floor box (10) according to claim 3, wherein said slot (290) presents the shape of a cross that is centered on the center of the front wall and that defines four foldable portions (213) each in the shape of a triangle.

13. A floor box (10) according to any preceding claim, wherein each slot (230; 240; 250; 260; 270; 280; 290; 330; 340) presents a width (d) that lies in the range 0.2 mm to 2 mm;

14. A floor box (10) according to the preceding claim, wherein each slot (230; 240; 250; 260; 270; 280; 290; 330; 340) presents a width (d) that is equal to about 1.5 mm.
